# FASCICULE DE BREVET EUROPEEN

(11) **EP 4 410 629 B1**
(45) Date de publication et mention de la délivrance du brevet: **22.07.2026**
(21) Numéro de dépôt: 24153239.9
(22) Date de dépôt: 22.01.2024
(51) Int. Cl.: B61C 3/02, B60L 15/00, B60L 50/50, B60L 53/00, B60L 9/18, B60L 50/53, B60L 58/18

(54) **SYSTÈME DE TRACTION DE VÉHICULE FERROVIAIRE ET VÉHICULE FERROVIAIRE ASSOCIÉ**
ZUGSYSTEM FÜR EIN SCHIENENFAHRZEUG UND ENTSPRECHENDES SCHIENENFAHRZEUG
RAILWAY VEHICLE TRACTION SYSTEM AND ASSOCIATED RAILWAY VEHICLE

(30) Priorité: 23.01.2023 FR 2300601
(43) Date de publication de la demande: 07.08.2024
(73) Titulaire: ALSTOM Holdings, 93400 Saint-Ouen-sur-Seine (FR)
(72) Inventeur: SOEFFKER, Carsten, 38321 DENKTE (DE); BELLOMO, Jean-Philippe, Roger, Fernand, 65000 TARBES (FR); ROUILLE, Bruno, 65200 ORDIZAN (FR); ABOUJDID, Eric, 65420 IBOS (FR)
(74) Mandataire: Plasseraud IP

(56) Documents cités:
- EP-A1- 2 189 320
- EP-A1- 2 875 982
- EP-A1- 3 955 407
- US-B2- 9 227 516

## Description

La présente invention concerne un système de traction de véhicule ferroviaire. L'invention concerne en outre un véhicule ferroviaire comprenant un tel système de traction.

Dans le domaine des véhicules ferroviaires, il est connu d'utiliser des unités de stockage d'énergie électrique, par exemple pour assurer la propulsion des véhicules. En raison de l'utilisation intensive des véhicules ferroviaires et des risques de défaillance des composants impliqués dans la chaine de traction, depuis l'unité de stockage d'énergie électrique jusqu'aux moteurs alimentés par cette unité, il est connu d'utiliser des systèmes redondants, comprenant par exemple deux chaines de tractions en parallèle. Dans le cas d'une défaillance sur l'une des chaines de tractions, l'autre chaine de traction peut assurer la propulsion du véhicule ferroviaire.

De tels systèmes ne donnent toutefois pas entière satisfaction. En effet, en cas de défaillance de l'un quelconque des composants électriques sur l'une des chaines de traction, l'ensemble de la chaine de traction est inutilisable. Ainsi, l'unité de stockage d'énergie de ladite chaine de traction, même si elle est encore en état de fonctionnement, ne peut pas être utilisé.

Ceci peut s'avérer particulièrement préjudiciable puisqu'une grande quantité de l'énergie stockée par le système devient alors inutilisable, résultant en une forte réduction du rayon d'action du véhicule ferroviaire et augmentant la probabilité de ne pas pouvoir terminer la mission du véhicule ferroviaire jusqu'à son terminus.

Les documents EP 3 955 407 A1, EP 2 189 320 A1, US 9 227 516 B2, EP 2 875 982 A1 décrivent des exemples de systèmes de traction de véhicule.

Ainsi, l'un des buts de l'invention est d'obtenir un système de traction permettant de limiter la réduction du rayon d'action du véhicule ferroviaire en cas de panne de composants électriques du système de traction du véhicule.

A cet effet, l'invention a pour objet un système de traction de véhicule ferroviaire comprenant :
- une première chaine de traction comprenant :
   + une première unité de stockage d'énergie électrique,
   + un premier convertisseur de puissance, et
   + un premier moteur de traction ; et
- une deuxième chaine de traction comprenant :
   + une deuxième unité de stockage d'énergie électrique,
   + un deuxième convertisseur de puissance, et
   + un deuxième moteur de traction ;
le système de traction comprenant un élément de commutation principal, mobile entre :
- une position régulière, dans laquelle la première et la deuxième chaines de traction sont déconnectées l'une de l'autre ; et
- une position d'anomalie, dans laquelle la première et la deuxième chaines de traction sont connectées l'une à l'autre et dans laquelle l'unité de stockage d'énergie de l'une de la première ou deuxième chaines de traction est connectée au convertisseur de puissance de l'autre de la première ou deuxième chaines de traction, ledit convertisseur de puissance étant alimenté par, ou alimentant, exclusivement ladite unité de stockage d'énergie.

L'utilisation d'un tel élément de commutation est particulièrement avantageux et permet d'utiliser l'unité de stockage d'énergie de l'une des chaines de tractions même si des composants de cette chaine de traction sont défaillants.

Selon l'invention,
- chaque chaine de traction comprend un élément de commutation secondaire, mobile entre :
   - une position de connexion, dans laquelle l'élément de commutation secondaire connecte le convertisseur de puissance de ladite chaine de traction à l'une des unités de stockage d'énergie électrique, et
   - une position d'isolation dans laquelle l'élément de commutation secondaire isole le convertisseur de puissance de ladite chaine de traction des unités de stockage d'énergie électrique ;
- le système comprend un module de commande, configuré pour commander la reconfiguration du système entre :
   - une configuration standard, dans laquelle l'élément de commutation principal est dans sa position régulière et chaque élément de commutation secondaire est dans sa position de connexion, la première unité de stockage d'énergie étant connectée au premier convertisseur de puissance et la deuxième unité de stockage d'énergie étant connectée au deuxième convertisseur de puissance,
   - une première configuration altérée, dans laquelle l'élément de commutation principal est dans sa position régulière et dans laquelle l'élément de commutation secondaire de l'une des chaines de traction est dans sa position d'isolation, l'élément de commutation secondaire de l'autre des chaines de traction étant dans sa position de de connexion,
   - une deuxième configuration altérée, dans laquelle l'élément de commutation principal est dans sa position d'anomalie et dans laquelle l'élément de commutation secondaire de l'une des chaines de traction est dans sa position d'isolation, l'élément de commutation secondaire de l'autre des chaines de traction étant dans sa position de de connexion, et
   - une troisième configuration altérée, dans laquelle l'élément de commutation principal est dans sa position d'anomalie et dans laquelle les éléments de commutation secondaires de chacune des chaines de traction sont dans leur position de connexion ;
- le système comprend deux modules de commande, la première chaine de traction comprenant un premier module de commande configuré pour détecter une défaillance de la première chaine de traction et la deuxième chaine de traction comprenant un deuxième module de commande configuré pour détecter une défaillance de la deuxième chaine de traction, chaque module de commande étant configuré pour commander une reconfiguration vers la première, la deuxième ou la troisième configuration altérée suite à la détection de l'une des défaillances.

Suivant d'autres aspects avantageux de l'invention, le système de traction de véhicule ferroviaire comporte l'une ou plusieurs des caractéristiques suivantes, prise(s) isolément ou suivant toute combinaison techniquement possible :
- chaque chaine de traction comprend un onduleur, connectant le convertisseur de puissance de ladite chaine de traction au moteur de traction de ladite chaine de traction ;
- chaque chaine de traction comprend un port configuré pour être connecté à une unité d'alimentation externe et pour alimenter en énergie électrique l'unité de stockage d'énergie électrique de ladite chaine de traction lorsque l'élément de commutation principal est dans sa position régulière, l'unité de stockage de l'autre chaine de traction étant alimentée par le port de ladite chaine de traction lorsque l'élément de commutation principal est dans sa position d'anomalie ;
- chaque chaine de traction comprend un convertisseur d'alimentation externe configuré pour connecter le l'unité d'alimentation externe au convertisseur de puissance de ladite chaine de traction ;
- le premier et le deuxième convertisseur de puissance sont des convertisseurs configurés pour convertir un courant continu à une première tension en un courant continu à une deuxième tension, différente de la première tension ; et
- la capacité de chacune des première et deuxième unités de stockage d'énergie électrique est comprise entre 100kWh et 1000 kWh.

L'invention concerne par ailleurs un véhicule ferroviaire comprenant un système de traction tel que précité.

L'invention sera mieux comprise à la lecture de la description qui va suivre, donnée uniquement à titre d'exemple non limitatif et faite en se référant au dessin sur lequel :

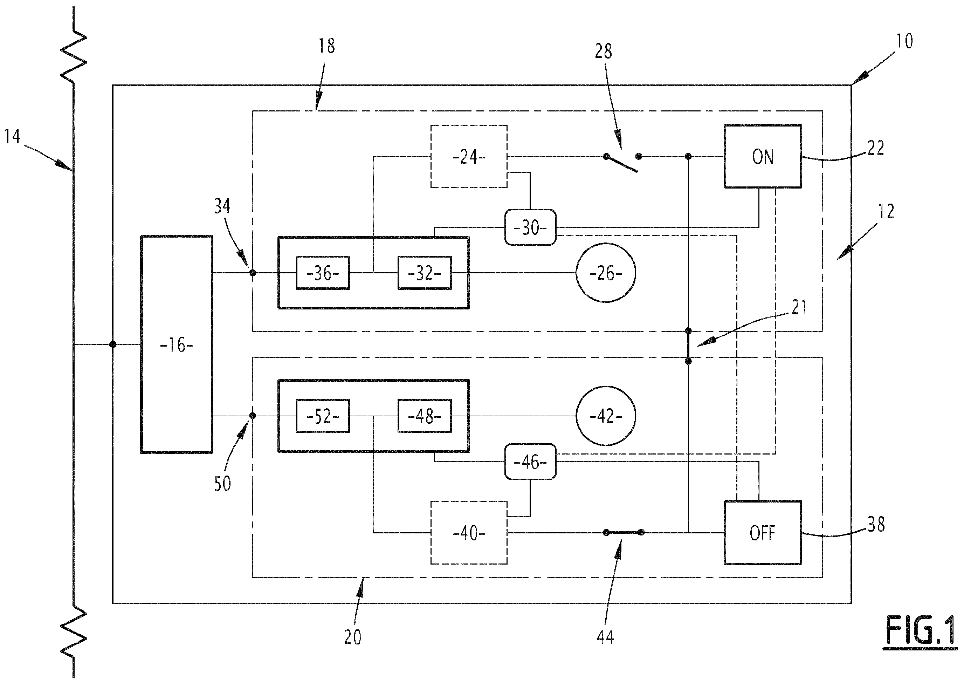

[Fig 1] la figure 1 est une représentation schématique d'un véhicule ferroviaire comprenant un système de traction d'un véhicule ferroviaire selon l'invention.

En référence à la figure 1, un véhicule ferroviaire 10 comprend un système de traction 12.

Le véhicule ferroviaire 10 est par exemple un véhicule de transport de passagers ou un véhicule de transport de marchandises. Dans un mode de réalisation, le véhicule ferroviaire fait par exemple partie d'un véhicule de transport de passagers ou d'un véhicule de transport de marchandises. Le véhicule ferroviaire 10 forme alors par exemple un véhicule de propulsion du véhicule de transport de marchandises ou de passagers.

Le véhicule ferroviaire 10 est par exemple configuré pour circuler sur des voies ferrées (non représentée) et est par exemple configuré pour être alimenté en électricité par un réseau électrique ferroviaire 14 comprenant par exemple une caténaire.

En particulier, le véhicule ferroviaire 10 comprend par exemple au moins une unité d'alimentation externe16 configurée pour alimenter le véhicule ferroviaire 10 en électricité. Dans un mode de réalisation, illustré notamment en figure 1, l'unité d'alimentation externe 16 comprend un pantographe configuré pour contacter la caténaire 14 et pour alimenter le véhicule ferroviaire 10 depuis la caténaire 14. Dans d'autres modes de réalisation, l'unité d'alimentation externe 16 est connectée à toute autre source d'énergie telle par exemple un moteur diesel ou une pile à combustibles du véhicule.

Comme illustré sur la figure 1, le véhicule ferroviaire 10 comprend une première chaine de traction 18, une deuxième chaine de traction 20 et un élément de commutation principal 21.

La première chaine de traction 18 comprend une première unité de stockage d'énergie électrique 22, un premier convertisseur de puissance 24 et un ou plusieurs premier(s) moteur(s) de traction 26. La première chaine de traction 18 comprend en outre de préférence un premier élément de commutation secondaire 28, un premier module de commande 30 et un onduleur 32. En outre, la première chaine de traction 18 comprend par exemple un port 34, configuré pour être connecté à l'unité d'alimentation externe 16, et un convertisseur d'alimentation externe 36, c'est-à-dire par exemple un convertisseur de puissance connecté à l'unité d'alimentation externe 16, par exemple un redresseur.

De façon analogue, et comme illustré sur la figure 1, la deuxième chaine de traction 20 comprend une deuxième unité de stockage d'énergie électrique 38, un deuxième convertisseur de puissance 40 et un ou plusieurs deuxième(s) moteur(s) de traction 42. La deuxième chaine de traction 20 comprend en outre de préférence un deuxième élément de commutation secondaire 44, un deuxième module de commande 46 et un onduleur 48. En outre, la deuxième chaine de traction 20 comprend par exemple un port 50, configuré pour être connecté à l'unité d'alimentation externe 16, et un convertisseur d'alimentation externe 52, c'est-à-dire par exemple un convertisseur de puissance connecté à l'unité d'alimentation externe 16.

La première 22 et la deuxième 38 unités de stockage d'énergie électrique comprennent par exemple au moins une batterie Lithium-Ion.

La capacité de chacune des première 22 et deuxième 38 unités de stockage d'énergie électrique est par exemple comprise entre 100 kWh et 1000 kWh.

Comme cela sera compris dans la suite de la description, la première unité de stockage d'énergie électrique 22 est par exemple configurée pour alimenter en électricité le premier moteur de traction 26 et/ou le deuxième moteur de traction 42. La deuxième unité de stockage d'énergie électrique 22 est par exemple configurée pour alimenter en électricité le premier moteur de traction 26 et/ou le deuxième moteur de traction 42. Dans des modes de réalisation non illustrés la première unité de stockage d'énergie électrique 22 est par exemple configurée pour alimenter en électricité une pluralité de premiers moteurs de traction 26 et/ou de deuxièmes moteurs de traction 42. La deuxième unité de stockage d'énergie électrique 22 est par exemple configurée pour alimenter en électricité une pluralité de premiers moteurs de traction 26 et/ou de deuxièmes moteurs de traction 42.

Comme illustré sur la figure 1, la première unité de stockage d'énergie 22 présente par exemple un mode activé, représenté par le terme ON sur la figure 1, dans lequel l'unité 22 peut être utilisée comme source d'énergie ou être chargée, et un mode désactivé, représenté par le terme OFF sur la figure 1, dans lequel l'unité 22 est par exemple déconnectée du reste du système de traction 12. Sur la figure 1, la première unité de stockage d'énergie 22 est activée et est par exemple apte à fournir de l'énergie au reste du système de traction 12. Dans un mode de réalisation non illustré, la première unité de stockage d'énergie 22 comprend à cet effet un commutateur connectant/déconnectant ladite unité au reste du système de traction.

Comme cela sera compris dans la suite de la description, la première unité de stockage d'énergie électrique 22 est par exemple configurée pour être alimentée en énergie électrique depuis le port 34, 50, d'au moins l'une de la première 18 et de la deuxième 20 chaine de traction.

Comme illustré sur la figure 1, la deuxième unité de stockage d'énergie 38 présente par exemple un mode activé, dans lequel l'unité 38 peut être utilisée comme source d'énergie ou être chargée, et un mode désactivé, dans lequel l'unité 38 est par exemple déconnectée du reste du système de traction 12. Sur la figure 1, la deuxième unité de stockage d'énergie 38 est désactivé et est ainsi déconnectée reste du système de traction 12. Dans un mode de réalisation non illustré, la deuxième unité de stockage 38 comprend à cet effet un commutateur connectant/déconnectant ladite unité 38 du reste du système de traction 12.

Comme cela sera compris dans la suite de la description, la deuxième unité de stockage d'énergie électrique 38 est par exemple configurée pour être alimentée en énergie électrique depuis le port 34, 50, d'au moins l'une de la première 18 et de la deuxième 20 chaine de traction.

L'élément de commutation principal 21 est mobile entre une position régulière et une position d'anomalie. L'élément de commutation principal 21 est illustré dans sa position d'anomalie sur la figure 1.

Lorsque l'élément de commutation principal 21 est dans sa position régulière, la première 18 et la deuxième 20 chaines de traction sont déconnectées l'une de l'autre. Comme cela sera exposé plus en détails par la suite, et lorsque l'élément de commutation principal 21 est dans sa position régulière, la première unité de stockage d'énergie 22 est par exemple connectée au premier convertisseur de puissance 24 et la deuxième unité de stockage d'énergie 38 est connectée au deuxième convertisseur de puissance 40.

Lorsque l'élément de commutation principal 21 est dans sa position d'anomalie, la première 18 et la deuxième 20 chaines de traction sont connectées l'une à l'autre. En particulier, lorsque l'élément de commutation est dans sa position d'anomalie, l'unité de stockage d'énergie 22, 38 de l'une de la première 18 ou deuxième 20 chaines de traction est connectée au convertisseur de puissance 24, 40 de l'autre de la première 18 ou deuxième 20 chaines de traction. Le convertisseur de puissance 24, 40 de l'autre de la première 18 ou deuxième 20 chaines de traction est alors alimenté par, ou alimente, exclusivement l'unité de stockage d'énergie 22, 38 de l'une de la première 18 ou deuxième 20 chaines de traction.

Ainsi, en d'autres termes, lorsque l'élément de commutation principal 21 est dans sa position d'anomalie l'unité de stockage d'énergie de la première chaine de traction 18 est connectée au convertisseur de puissance 40 de la deuxième chaine de traction 20 ou l'unité de stockage d'énergie 38 de la deuxième chaine de traction 38 est connectée au convertisseur de puissance 24 de la première chaine de traction 18. Le convertisseur de puissance 24 de la première chaine de traction 18 est alors alimenté par, ou alimente, exclusivement l'unité de stockage d'énergie 38 de la deuxième chaine de traction 20, ou le convertisseur de puissance 40 de la deuxième chaine de traction 20 est alors alimenté par, ou alimente, exclusivement l'unité de stockage d'énergie 22 de la première chaine de traction 18.

Dans l'exemple de la figure 1, l'unité de stockage d'énergie 22 de la première chaine de traction 18, c'est-à-dire la première unité de stockage d'énergie 22, est connectée au convertisseur de puissance 40 de la deuxième chaine de traction, c'est-à-dire au deuxième convertisseur de puissance 40. Le deuxième convertisseur de puissance 40 est alors alimenté par, ou alimente, exclusivement la première unité de stockage d'énergie électrique 22.

L'élément de commutation secondaire 28, 44 de chaque chaine de traction 18, 20, c'est-à-dire le premier 28 et le deuxième 44 élément de commutation secondaire, est mobile entre une position de connexion et une position d'isolation. Dans l'exemple de la figure 1, le premier élément de commutation secondaire 28 est dans sa position d'isolation et le deuxième élément de commutation secondaire 44 est dans sa position de connexion.

Lorsqu'il est dans sa position de connexion, l'élément de commutation secondaire 28, 44 de l'une des chaines de traction 18, 20 connecte le convertisseur de puissance de ladite chaine de traction 18, 20 à l'une des unités de stockage d'énergie électrique 22, 38. Dans l'exemple de la figure 1, l'élément de commutation secondaire 44 de la deuxième chaine de traction 20 connecte le convertisseur de puissance 40 de la deuxième chaine de traction 20 à l'unité de stockage d'énergie électrique 22 de la première chaine de traction 18.

Lorsqu'il est dans sa position d'isolation, l'élément de commutation secondaire 28, 44 de l'une des chaines de traction 18, 20 isole le convertisseur de puissance 24, 40 de ladite chaine de traction 18, 20 des unités de stockage d'énergie électrique 22, 38. Dans l'exemple de la figure 1, l'élément de commutation secondaire 28 de la première chaine de traction 18 isole le convertisseur de puissance 24 de la première chaine de traction 18 des première 22 et deuxième 38 unités de stockage d'énergie électrique.

Comme vu plus haut, chaque chaine de traction 18, 20 comprend ur module de commande 30, 46.

Le module de commande 30, 46 est configuré pour commander la reconfiguration du système 12 entre une configuration standard, une première configuration altérée une deuxième configuration altérée et une troisième configuration altérée.

Le premier module de commande 30 est configuré pour détecter une défaillance de la première chaine de traction 18 et le deuxième module de commande 46 configuré pour détecter une défaillance de la deuxième chaine de traction 20. Chaque module de commande 30, 46 est alors configuré pour commander une reconfiguration vers la première configuration altérée, la deuxième configuration altérée ou la troisième configuration altérée suite à la détection d'une défaillance.

Dans l'exemple illustré dans la figure 1, le premier module de commande 30 est connecté au premier convertisseur de puissance 24 et le deuxième module de commande 46 est connecté au deuxième convertisseur de puissance 40. Chaque module de commande 30, 46 est alors par exemple configuré pour détecter une défaillance du convertisseur de puissance 24, 40 auquel il est connecté et pour commander une reconfiguration vers la première, la deuxième ou la troisième configuration altérée suite à la détection de la défaillance convertisseur de puissance 24, 40 auquel le module de commande 30, 46 est connecté. Le premier module de commande 30 et le deuxième module de commande 46 sont par exemple en communication pour commander la reconfiguration du système 12.

En outre, et comme illustré sur le figure 1, le premier module de commande 30 est par exemple connecté à l'unité de stockage d'énergie 22, à l'onduleur 32, au moteur 26 et/ou au convertisseur d'alimentation externe 36 de la première chaine de traction 18 et est configuré pour commander une reconfiguration vers la première, la deuxième ou la troisième configuration altérée suite à la détection d'une défaillance de la première unité de stockage d'énergie 22, de l'onduleur 32, du moteur 26 et/ou du convertisseur d'alimentation externe 36 de la première chaine de traction 18.

De façon analogue, le deuxième module de commande 46 est par exemple connecté à l'unité de stockage d'énergie 38, à l'onduleur 48, au moteur 42 et/ou au convertisseur d'alimentation externe 52 de la deuxième chaine de traction 20 et est configuré pour commander une reconfiguration vers la première ou la troisième configuration altérée suite à la détection de la défaillance de la deuxième unité de stockage d'énergie 38, de l'onduleur 48, du moteur 42 et/ou du convertisseur d'alimentation externe 52 de la deuxième chaine de traction 20.

Dans la configuration standard du système 12, l'élément de commutation principal 21 est dans sa position régulière et chaque élément de commutation secondaire 28, 44 est dans sa position de connexion. Ainsi la première unité de stockage d'énergie 22 est connectée au premier convertisseur de puissance 24 et la deuxième unité de stockage d'énergie 38 est connectée est deuxième convertisseur de puissance 40.

Dans la première configuration altérée du système 12, l'élément de commutation principal 21 est dans sa position régulière, l'élément de commutation secondaire 28, 44 de l'une des chaines de traction 18, 20 étant dans sa position d'isolation et l'élément de commutation secondaire 28, 44 de l'autre des chaines de traction 18, 20 étant dans sa position de connexion. Le système 12 définit alors deux premières configurations altérées distinctes, selon que le premier élément de commutation secondaire 28 ou le deuxième élément de commutation secondaire 44 soit dans sa position de connexion, et l'autre élément de commutation secondaire 28, 44 dans sa position d'isolation.

En particulier, et par exemple, lorsque le premier module de commande 30 détecte une défaillance du premier convertisseur de puissance 24, de la première unité de stockage d'énergie 22, de l'onduleur 32, du moteur 26 et/ou du convertisseur d'alimentation externe 36, ledit premier module de commande 30 est par exemple configuré pour commander une reconfiguration vers l'une des premières configurations altérées, et en particulier la première configuration altérée dans laquelle le premier élément de commutation secondaire 28 est dans sa position d'isolation et le deuxième élément de commutation secondaire 44 est dans sa position de connexion.

En d'autres termes, le premier 30 et/ou le deuxième 46 module de commande est configuré pour déplacer/maintenir l'élément de commutation secondaire 28, 44 de la chaine de traction 18, 20 dans laquelle le convertisseur de puissance 24, 40, la première unité de stockage d'énergie 22, 38, l'onduleur 32, 48, le moteur 26, 42 et/ou le convertisseur d'alimentation externe 36, 52 est défaillant vers sa position d'isolation.

Dans la deuxième configuration altérée du système 12, l'élément de commutation principal 21 est dans sa position d'anomalie, l'élément de commutation secondaire 28, 44 de l'une des chaines de traction 18, 20 étant dans sa position d'isolation et l'élément de commutation secondaire 28, 44 de l'autre des chaines de traction 18, 20 étant dans sa position de connexion. Le système 12 définit alors deux deuxièmes configurations altérées distinctes, selon que le premier élément de commutation secondaire 28 ou le deuxième élément de commutation secondaire 44 soit dans sa position de connexion, et l'autre élément de commutation secondaire 28, 44 dans sa position d'isolation.

En particulier, et par exemple, lorsque le premier module de commande 30 détecte une défaillance du premier convertisseur de puissance 24, de la première unité de stockage d'énergie 22, de l'onduleur 32, du moteur 26 et/ou du convertisseur d'alimentation externe 36, ledit premier module de commande 30 est par exemple configuré pour commander une reconfiguration vers l'une des deuxièmes configurations altérées, dans laquelle le premier élément de commutation secondaire 28 est dans sa position d'isolation et le deuxième élément de commutation secondaire 44 est dans sa position de connexion.

En d'autres termes, le premier 30 et/ou le deuxième 46 module de commande est configuré pour déplacer/maintenir l'élément de commutation secondaire 28, 44 de la chaine de traction 18, 20 dans laquelle le convertisseur de puissance 24, 40, la première unité de stockage d'énergie 22, 38, l'onduleur 32, 48, le moteur 26, 42 et/ou le convertisseur d'alimentation externe 36, 52 est défaillant vers sa position d'isolation. Une telle deuxième configuration altérée est notamment illustrée en figure 1.

Dans un mode de réalisation, le premier 30 et/ou le deuxième 46 module de commande est configuré pour commander une reconfiguration de la première configuration altérée vers la deuxième configuration altérée lorsque l'unité de stockage d'énergie 22, 38 de la chaine de traction 18, 20 dans laquelle le premier convertisseur de puissance 24, 40 est en état de fonctionnement, est épuisée. Dans un mode de réalisation particulier, le premier 30 et/ou le deuxième 46 module de commande est configuré pour commander une telle reconfiguration seulement lorsque l'unité de stockage d'énergie de la chaine de traction 18, 20 dans laquelle le premier convertisseur de puissance 24 est en état de fonctionnement, est épuisée. Dans une variante, des cycles de reconfiguration entre la première et la deuxième configuration alternée peuvent être commandés par le premier 30 et/ou le deuxième 46 module de commande, par exemple jusqu'à l'épuisement des deux unités de stockage d'énergie 22, 38.

Dans chacune des deuxièmes configurations altérées, l'unité de stockage d'énergie 22, 38 de l'une des première 18 et deuxième chaine 20 de traction est exclusivement alimentée par, ou alimente exclusivement, le convertisseur de puissance 24, 40 de l'autre des première 18 et deuxième 20 chaines de traction.

Dans la troisième configuration altérée du système 12, l'élément de commutation principal est dans sa position d'anomalie, les éléments de commutation secondaire 28, 44 de chacune des chaines de traction 18, 20 étant dans leur position de connexion.

En particulier, et par exemple, lorsque le module de commande 30, 46 de l'une des première 18 et deuxième 20 chaines de traction détecte une défaillance de l'unité de stockage d'énergie 22, 38 à laquelle il est connecté, ledit module de commande 30, 46 commande la reconfiguration du système 12 vers la troisième configuration altérée. En complément, le module de commande 30, 46 est par exemple en outre configuré pour commander l'unité de stockage d'énergie 22, 38 défaillante vers son mode désactivé et par exemple pour commander l'autre unité de stockage d'énergie 22, 38 vers son mode activé.

Dans la troisième configuration altérée, l'unité stockage d'énergie 22, 38 de l'une des chaines de traction 18, 20, est alimentée par, ou alimente, le convertisseur de puissance 24, 40 de chacune des première 18 et deuxième 20 chaines de traction. Comme vu plus haut, et comme l'élément de commutation principal 21 est dans sa position d'anomalie, le convertisseur de puissance 24, 40 de l'autre chaine de traction 18, 20 est alimenté par, ou alimente, exclusivement l'unité de stockage de ladite l'une des chaines de traction 18, 20. En d'autres termes, dans une telle configuration, chaque convertisseur de puissance 24, 40 est alimenté par, ou alimente, exclusivement une seule des unités de stockage d'énergie 22, 38.

Comme vu plus haut, chaque port 34, 50 est configuré pour recevoir de l'énergie électrique depuis un réseau électrique ferroviaire par l'intermédiaire de l'unité d'alimentation externe 16.

Chaque port 34, 50 d'une chaine de traction 18, 20 est en particulier configuré pour alimenter en énergie électrique l'unité de stockage d'énergie électrique 22, 38, de ladite chaine de traction 18, 20 lorsque l'élément de commutation principal 21 est dans sa position régulière, c'est-à-dire par exemple lorsque le système 12 est dans sa configuration standard.

L'unité de stockage d'énergie électrique 22, 38, de l'autre chaine de traction est par exemple configurée pour être alimentée par le port 34, 50 de ladite une chaine de traction 18, 20 lorsque le système 12 est dans sa deuxième ou troisième configuration altérée. En d'autres termes, l'unité de stockage d'énergie électrique 22, 38 de l'une des chaines de traction est configurée pour être alimentée par le port 34, 50 de l'autre chaine de traction 18, 20 lorsque le système 12 est dans sa deuxième ou troisième configuration altérée.

En particulier, et par exemple, l'unité de stockage d'énergie électrique 22, 38 de l'une des chaines de traction est configurée pour n'être alimentée que par le port 34, 50 de l'autre chaine de traction 18, 20 lorsque le système est dans sa deuxième configuration altérée. L'unité de stockage d'énergie électrique 22, 38 de l'une des chaines de traction est par exemple configurée pour être alimentée par le port 34, 50 des deux chaines de traction 18, 20 lorsque le système est dans sa troisième configuration altérée.

Comme illustré sur la figure 1, le convertisseur d'alimentation externe 36, 52 de chaque chaine de traction 18, 20 connecte par exemple l'unité d'alimentation externe 16 au convertisseur de puissance 24, 40 de ladite chaine de traction 18, 20. Par exemple, et comme illustré sur la figure 1, l'unité d'alimentation externe 16 est connectée aux convertisseurs 36, 52 par l'intermédiaire des ports 34, 52 desdites chaines de traction 18, 20.

Comme illustré sur la figure 1, le convertisseur 36, 52 de chaque chaine de traction 18, 20 connecte par exemple en outre l'unité d'alimentation externe 16 à l'onduleur 32, 48 de ladite chaine de traction 18, 20.

Comme illustré sur la figure 1, l'onduleur 32, 48 de chaque chaine de traction 18, 20 connecte le convertisseur de puissance 24, 40 de chaque chaine de traction 18, 20 au moteur de traction 26, 42 de ladite chaine de traction 18, 20.

L'onduleur 32, 48 de chaque chaine de traction 18, 20 connecte par exemple en outre le convertisseur d'alimentation externe 36, 52 de chaque chaine de traction 18, 20 au moteur de traction 26, 42 de ladite chaine de traction 18, 20.

Le premier 24 et le deuxième 40 convertisseurs de puissance 24 sont par exemple configurés pour convertir un courant continu à une première tension en un courant continu à une deuxième tension, différente de la première tension

Le fonctionnement d'un système de traction tel que décrit plus haut va maintenant être présenté.

Lorsque les composants de la première 18 et de la deuxième 20 chaine de traction fonctionnent normalement, c'est-à-dire sans défaillance, l'élément de commutation principal 21 est dans sa position régulière, et le système 12 est par exemple dans sa configuration standard.

La première unité de stockage d'énergie 22 est connectée au premier convertisseur de puissance 24 et la deuxième unité de stockage d'énergie 38 est connectée au deuxième convertisseur de puissance 40. La première unité de stockage d'énergie 22 alimente par exemple le premier moteur de traction 26 au travers du premier convertisseur de puissance 24 et la deuxième unité de stockage d'énergie 38 alimente par exemple le deuxième moteur de traction 42 au travers du deuxième convertisseur de puissance 40.

Lorsqu'une anomalie a lieu dans l'une des chaines de traction 18, 20, par exemple lorsque l'un des modules de commande 30, 46 détecte une défaillance, par exemple de l'unité de stockage d'énergie 22, 38 de l'onduleur 32, 48 du moteur 26, 42 et/ou du convertisseur d'alimentation externe 36, 52 et/ou de l'un des convertisseurs de puissance 24, 40, le système 12 est par exemple reconfiguré vers sa première, sa deuxième ou sa troisième configuration altérée.

Par exemple, si une anomalie a lieu sur le convertisseur de puissance 24, 40, sur l'onduleur 32, 48, sur le moteur 26, 42 et/ou sur le convertisseur d'alimentation externe 36, 52 de l'une des chaines de traction 18, 20, le premier 30 et/ou le deuxième 46 module de commande commande la reconfiguration vers la première ou la deuxième configuration altérée. Par exemple, le premier 30 et/ou le deuxième 46 module de commande commande en premier lieu la reconfiguration vers la première configuration altérée. Ensuite, et par exemple lorsque le premier 30 et/ou le deuxième 46 module de commande détecte que l'unité de stockage d'énergie de la chaine de traction 18, 20 dans laquelle l'élément de commutation secondaire est en position de connexion est dans une mode désactivé et est par exemple épuisée, le premier 30 et/ou le deuxième 46 module de commande la reconfiguration vers la deuxième configuration altérée en déplaçant l'élément de commutation principal 21 vers sa position d'anomalie sans déplacer les premier 28 et deuxième 44 éléments de commutation secondaires, puis l'unité de stockage d'énergie 22, 38 de la chaine de traction 18, 20 dans laquelle l'élément de commutation secondaire est en position d'isolation est passée dans un mode activé.

Par exemple, si une anomalie a lieu sur l'unité de stockage d'énergie 22, 38 de l'une des chaines de traction 18, 20, le premier 30 et/ou le deuxième 46 module de commande commande la reconfiguration vers la première, la deuxième ou la troisième configuration altérée. Par exemple, le premier 30 et/ou le deuxième 46 module de commande est connecté à un module de conduite du véhicule et est configuré pour commander la reconfiguration vers la troisième configuration altérée lorsqu'un couple élevé est requis pour les moteurs de traction 26, 42 et vers l'une des première ou deuxième configurations altérées dans le cas contraire.

## Revendications

1. Système de traction de véhicule ferroviaire (12), comprenant :
- une première chaine de traction (18) comprenant :
+ une première unité de stockage d'énergie électrique (22),
+ un premier convertisseur de puissance (24), et
+ un premier moteur de traction (26); et
- une deuxième chaine de traction (20) comprenant :
+ une deuxième unité de stockage d'énergie électrique (38),
+ un deuxième convertisseur de puissance (40), et
+ un deuxième moteur de traction (42);
le système de traction comprenant un élément de commutation principal (21), mobile entre :
- une position régulière, dans laquelle la première (18) et la deuxième (20) chaines de traction sont déconnectées l'une de l'autre ; et
- une position d'anomalie, dans laquelle la première (18) et la deuxième (20) chaines de traction sont connectées l'une à l'autre et dans laquelle l'unité de stockage d'énergie (22, 38) de l'une de la première (18) ou deuxième (20) chaines de traction est connectée au convertisseur de puissance (24, 40) de l'autre de la première (18) ou deuxième (20) chaines de traction, ledit convertisseur de puissance (24, 40) étant alimenté par, ou alimentant, exclusivement ladite unité de stockage d'énergie (22, 38) ;
chaque chaine de traction (18, 20) comprenant un élément de commutation secondaire (28, 44), mobile entre :
- une position de connexion, dans laquelle l'élément de commutation secondaire (28, 44) connecte le convertisseur de puissance (24, 40) de ladite chaine de traction (18, 20) à l'une des unités de stockage d'énergie électrique (22, 38), et
- une position d'isolation dans laquelle l'élément de commutation secondaire (28, 44) isole le convertisseur de puissance (24, 40) de ladite chaine de traction (18, 20) des unités de stockage d'énergie électrique (22, 38) ;
**caractérisé en ce que** le système comprend un module de commande (30, 46), configuré pour commander la reconfiguration du système entre :
- une configuration standard, dans laquelle l'élément de commutation principal (21) est dans sa position régulière et chaque élément de commutation secondaire (28, 44) est dans sa position de connexion, la première unité de stockage d'énergie (22) étant connectée au premier convertisseur de puissance (24) et la deuxième unité de stockage d'énergie (38) étant connectée au deuxième convertisseur de puissance (40),
- une première configuration altérée, dans laquelle l'élément de commutation principal (21) est dans sa position régulière et dans laquelle l'élément de commutation secondaire (28, 44) de l'une des chaines de traction (18, 20) est dans sa position d'isolation, l'élément de commutation secondaire (28, 44) de l'autre des chaines de traction (18, 20) étant dans sa position de de connexion,
- une deuxième configuration altérée, dans laquelle l'élément de commutation principal (21) est dans sa position d'anomalie et dans laquelle l'élément de commutation secondaire (28, 44) de l'une des chaines de traction (18, 20) est dans sa position d'isolation, l'élément de commutation secondaire (28, 44) de l'autre des chaines de traction (18, 20) étant dans sa position de de connexion, et
- une troisième configuration altérée, dans laquelle l'élément de commutation principal (21) est dans sa position d'anomalie et dans laquelle les éléments de commutation secondaires (28, 40) de chacune des chaines de traction (18, 20) sont dans leur position de connexion ;
dans lequel le système comprend deux modules de commande (30, 46), la première chaine de traction (18) comprenant un premier module de commande (30) configuré pour détecter une défaillance de la première chaine de traction (18) et la deuxième chaine de traction (20) comprenant un deuxième module de commande (46) configuré pour détecter une défaillance de la deuxième chaine de traction (20), chaque module de commande (30, 46) étant configuré pour commander une reconfiguration vers la première, la deuxième ou la troisième configuration altérée suite à la détection de l'une des défaillances.

2. Système de traction (12) selon la revendication 1, dans lequel chaque chaine de traction comprend un onduleur (32, 48), connectant le convertisseur de puissance (24) de ladite chaine de traction (18, 20) au moteur de traction (26, 42) de ladite chaine de traction (18, 20).

3. Système de traction (12) selon la revendication 1 ou 2, dans lequel chaque chaine de traction (18, 20) comprend un port (34, 50) configuré pour être connecté à une unité d'alimentation externe (16) et pour alimenter en énergie électrique l'unité de stockage d'énergie électrique (22, 38) de ladite chaine de traction (18, 20) lorsque l'élément de commutation principal (21) est dans sa position régulière, l'unité de stockage (22, 38) de l'autre chaine de traction (18, 20) étant alimentée par le port (34, 50) de ladite chaine de traction (18, 20) lorsque l'élément de commutation principal (21) est dans sa position d'anomalie.

4. Système de traction (12) selon la revendication 3, dans lequel chaque chaine de traction (18, 20) comprend un convertisseur d'alimentation externe (36, 52) configuré pour connecter le l'unité d'alimentation externe (16) au convertisseur de puissance (24, 40) de ladite chaine de traction (18, 20).

5. Système de traction (12) selon l'une quelconque des revendications précédentes, dans lequel le premier (24) et le deuxième (40) convertisseur de puissance sont des convertisseurs configurés pour convertir un courant continu à une première tension en un courant continu à une deuxième tension, différente de la première tension.

6. Système de traction (12) selon l'une quelconque des revendications précédentes, dans lequel la capacité de chacune des première (22) et deuxième (38) unités de stockage d'énergie électrique est comprise entre 100kWh et 1000 kWh.

7. Véhicule ferroviaire (10) comprenant un système de traction (12) selon l'une quelconque des revendications 1 à 6.

## Patentansprüche

1. Antriebssystem für ein Schienenfahrzeug (12), umfassend:
- eine erste Antriebskette (18), umfassend:
+ eine erste elektrische Energiespeichereinheit (22),
+ einen ersten Leistungswandler (24), und
+ einen ersten Antriebsmotor (26); und
- eine zweite Antriebskette (20), umfassend:
+ eine zweite elektrische Energiespeichereinheit (38),
+ einen zweiten Leistungswandler (40), und
+ einen zweiten Antriebsmotor (42);
wobei das Antriebssystem ein Hauptschaltelement (21) umfasst, welches beweglich ist zwischen:
- einer regulären Position, in welcher die erste (18) und die zweite (20) Antriebskette voneinander getrennt sind; und
- einer Abweichungsposition, in welcher die erste (18) und die zweite (20) Antriebskette miteinander verbunden sind und in welcher die Energiespeichereinheit (22, 38) von einer der ersten (18) oder zweiten (20) Antriebskette mit dem Leistungswandler (24, 40) der anderen der ersten (18) oder zweiten (20) Antriebskette verbunden ist, wobei der Leistungswandler (24, 40) ausschließlich von der Energiespeichereinheit (22, 38) versorgt wird oder diese versorgt;
wobei jede Antriebskette (18, 20) ein sekundäres Schaltelement (28, 44) umfasst, welches beweglich ist zwischen:
- einer Verbindungsposition, in welcher das sekundäre Schaltelement (28, 44) den Leistungswandler (24, 40) der Antriebskette (18, 20) mit einer der elektrischen Energiespeichereinheiten (22, 38) verbindet, und
- einer Isolationsposition, in welcher das sekundäre Schaltelement (28, 44) den Leistungswandler (24, 40) der Antriebskette (18, 20) von den elektrischen Energiespeichereinheiten (22, 38) trennt;
**dadurch gekennzeichnet, dass** das System ein Steuermodul (30, 46) umfasst, welches konfiguriert ist, um die Rekonfiguration des Systems zu steuern zwischen:
- einer Standardkonfiguration, in welcher das Hauptschaltelement (21) in seiner regulären Position ist und jedes sekundäre Schaltelement (28, 44) in seiner Verbindungsposition ist, wobei die erste Energiespeichereinheit (22) mit dem ersten Leistungswandler (24) verbunden ist und die zweite Energiespeichereinheit (38) mit dem zweiten Leistungswandler (40) verbunden ist,
- einer ersten geänderten Konfiguration, in welcher das Hauptschaltelement (21) in seiner regulären Position ist und in welcher das sekundäre Schaltelement (28, 44) einer der Antriebsketten (18, 20) in seiner Isolationsposition ist, wobei das sekundäre Schaltelement (28, 44) der anderen der Antriebsketten (18, 20) in seiner Verbindungsposition ist,
- einer zweiten geänderten Konfiguration, in welcher das Hauptschaltelement (21) in seiner Abweichungsposition ist und in welcher das sekundäre Schaltelement (28, 44) einer der Antriebsketten (18, 20) in seiner Isolationsposition ist, wobei das sekundäre Schaltelement (28, 44) der anderen der Antriebsketten (18, 20) in seiner Verbindungsposition ist, und
- einer dritten geänderten Konfiguration, in welcher das Hauptschaltelement (21) in seiner Abweichungsposition ist und in welcher die sekundären Schaltelemente (28, 40) jeder der Antriebsketten (18, 20) in ihrer Verbindungsposition sind;
wobei das System zwei Steuermodule (30, 46) umfasst, wobei die erste Antriebskette (18) ein erstes Steuermodul (30) umfasst, welches konfiguriert ist, um einen Ausfall der ersten Antriebskette (18) zu detektieren, und die zweite Antriebskette (20) ein zweites Steuermodul (46) umfasst, welches konfiguriert ist, um einen Ausfall der zweiten Antriebskette (20) zu detektieren, wobei jedes Steuermodul (30, 46) konfiguriert ist, um eine Rekonfiguration zur ersten, zweiten oder dritten geänderten Konfiguration nach der Detektion einer der Ausfälle zu steuern.

2. Antriebssystem (12) nach Anspruch 1, wobei jede Antriebskette einen Wechselrichter (32, 48) umfasst, welcher den Leistungswandler (24) der Antriebskette (18, 20) mit dem Antriebsmotor (26, 42) der Antriebskette (18, 20) verbindet.

3. Antriebssystem (12) nach Anspruch 1 oder 2, wobei jede Antriebskette (18, 20) einen Anschluss (34, 50) umfasst, der konfiguriert ist, um mit einer externen Versorgungseinheit (16) verbunden zu werden und um die elektrische Energiespeichereinheit (22, 38) der Antriebskette (18, 20) mit elektrischer Energie zu versorgen, wenn das Hauptschaltelement (21) in seiner regulären Position ist, wobei die Energiespeichereinheit (22, 38) der anderen Antriebskette (18, 20) durch den Anschluss (34, 50) der Antriebskette (18, 20) versorgt wird, wenn das Hauptschaltelement (21) in seiner Abweichungsposition ist.

4. Antriebssystem (12) nach Anspruch 3, wobei jede Antriebskette (18, 20) einen externen Versorgungswandler (36, 52) umfasst, welcher konfiguriert ist, um die externe Versorgungseinheit (16) mit dem Leistungswandler (24, 40) der Antriebskette (18, 20) zu verbinden.

5. Antriebssystem (12) nach einem der vorhergehenden Ansprüche, wobei der erste (24) und der zweite (40) Leistungswandler Wandler sind, welche konfiguriert sind, um einen Gleichstrom mit einer ersten Spannung in einen Gleichstrom mit einer zweiten Spannung zu wandeln, verschieden von der ersten Spannung.

6. Antriebssystem (12) nach einem der vorhergehenden Ansprüche, wobei die Kapazität jeder der ersten (22) und zweiten (38) elektrischen Energiespeichereinheiten zwischen 100 kWh und 1000 kWh liegt.

7. Schienenfahrzeug (10), umfassend ein Antriebssystem (12) nach einem der Ansprüche 1 bis 6.

## Claims

1. Railway vehicle traction system (12), comprising:
- a first traction chain (18) comprising:
+ a first electrical energy storage unit (22),
+ a first power converter (24), and
+ a first traction motor (26); and
- a second traction chain (20) comprising:
+ a second electrical energy storage unit (38),
+ a second power converter (40), and
+ a second traction motor (42);
the traction system comprising a main switching element (21), movable between:
- a regular position, in which the first (18) and second (20) traction chains are disconnected from each other; and
- an anomaly position, wherein the first (18) and second (20) traction chains are connected to each other and wherein the energy storage unit (22, 38) of one of the first (18) or second (20) traction chains is connected to the power converter (24, 40) of the other of the first (18) or second (20) traction chains, said power converter (24, 40) being supplied by, or supplying, exclusively said energy storage unit (22, 38);
each traction chain (18, 20) comprising a secondary switching element (28, 44), movable between:
- a connection position, wherein the secondary switching element (28, 44) connects the power converter (24, 40) of said traction chain (18, 20) to one of the electrical energy storage units (22, 38), and
- an isolation position wherein the secondary switching element (28, 44) isolates the power converter (24, 40) of said traction chain (18, 20) from the electrical energy storage units (22, 38);
**characterized in that**
the system comprises a control module (30, 46), configured to control the reconfiguration of the system between:
- a standard configuration, wherein the main switching element (21) is in its regular position and each secondary switching element (28, 44) is in its connection position, the first energy storage unit (22) being connected to the first power converter (24) and the second energy storage unit (38) being connected to the second power converter (40),
- a first altered configuration, wherein the main switching element (21) is in its regular position and wherein the secondary switching element (28, 44) of one of the traction chains (18, 20) is in its isolation position, the secondary switching element (28, 44) of the other of the traction chains (18, 20) being in its connection position,
- a second altered configuration, wherein the main switching element (21) is in its anomaly position and wherein the secondary switching element (28, 44) of one of the traction chains (18, 20) is in its isolation position, the secondary switching element (28, 44) of the other of the traction chains (18, 20) being in its connection position, and
- a third altered configuration, wherein the main switching element (21) is in its anomaly position and wherein the secondary switching elements (28, 40) of each of the traction chains (18, 20) are in their connection position;
wherein the system comprises two control modules (30, 46), the first traction chain (18) comprising a first control module (30) configured to detect a failure of the first traction chain (18) and the second traction chain (20) comprising a second control module (46) configured to detect a failure of the second traction chain (20), each control module (30, 46) being configured to control a reconfiguration to the first, second or third altered configuration following the detection of one of the failures.

2. Traction system (12) according to claim 1, wherein each traction chain comprises an inverter (32, 48), connecting the power converter (24) of said traction chain (18, 20) to the traction motor (26, 42) of said traction chain (18, 20).

3. Traction system (12) according to claim 1 or 2, wherein each traction chain (18, 20) comprises a port (34, 50) configured to be connected to an external power supply unit (16) and to supply electrical energy to the electrical energy storage unit (22, 38) of said traction chain (18, 20) when the main switching element (21) is in its regular position, the storage unit (22, 38) of the other traction chain (18, 20) being powered by the port (34, 50) of said traction chain (18, 20) when the main switching element (21) is in its anomaly position.

4. Traction system (12) according to claim 3, wherein each traction chain (18, 20) comprises an external power supply converter (36, 52) configured to connect the external power supply unit (16) to the power converter (24, 40) of said traction chain (18, 20).

5. Traction system (12) according to any one of the preceding claims, wherein the first (24) and second (40) power converters are converters configured to convert a direct current at a first voltage into a direct current at a second voltage, different from the first voltage.

6. Traction system (12) according to any one of the preceding claims, wherein the capacity of each of the first (22) and second (38) electrical energy storage units is between 100kWh and 1000 kWh.

7. Railway vehicle (10) comprising a traction system (12) according to any one of claims 1 to 6.
